Europäisches Patentamt

European Patent Office

Office européen des brevets

(11) Publication number: **0 251 267**
**A1**

## (12) EUROPEAN PATENT APPLICATION

(21) Application number: 87109302.7

(22) Date of filing: 28.06.87

(51) Int. Cl.4: **C08J 5/00** , **B29C 67/22** , **B29C 67/14**

(30) Priority: 01.07.86 IT 6752486

(43) Date of publication of application:
07.01.88 Bulletin 88/01

(84) Designated Contracting States:
DE ES FR GB

(71) Applicant: PIANFEI IPA S.p.A.
Via Cuneo, 27
I-12080 Pianfei (Province of Cuneo)(IT)

(72) Inventor: Mondino, Lino
Via Cuneo 38
I-12080 Pianfei Cuneo(IT)

(74) Representative: Modiano, Guido et al
MODIANO, JOSIF, PISANTY & STAUB
Modiano & Associati Via Meravigli, 16
I-20123 Milan(IT)

(54) **Method for manufacturing moldable, lightweight, self-supporting soundproofing articles, in particular inner panels of motor vehicles.**

(57) A method is described for manufacturing moldable, lightweight, self-supporting and soundproofing articles, in particular panels for the interior of motor vehicles, comprising a first step wherein a semi-worked article is manufactured, consisting of a mat of glass fibers impregnated with thermoactivatable polyurethane resin which, after drying, is rolled and stored, and a second and subsequent step wherein a soundproofing spacer material is superimposed on at least one mat of glass fibers resulting from the first step or is interposed between two of said mats, the obtained structure is cut into pieces, and a piece is loaded into a forming mold, after the possible application of at least one aesthetical surface covering. The mold is heated and controlled by thermostats to produce the activation of the resin which, reacting irreversibly, assumes the necessary characteristics of rigidity and resistance to temperature and humidity.

Fig.1

Fig.2

## METHOD FOR MANUFACTURING MOLDABLE, LIGHTWEIGHT, SELF-SUPPORTING SOUNDPROOFING AR-TICLES, IN PARTIUCLAR INNER PANELS OF MOTOR VEHICLES

The present invention relates to a method for manufacturing moldable, lightweight, self-supporting and soundproofing articles, and more generally of all moldable rigid or semi-rigid elements, which can be obtained with the method as described hereinafter.

A typical application of the products which can be obtained with the method according to the present invention is represented by the covering and outfitting elements of the interior of motor vehicles, such as, in particular, the self-supporting covering of the ceiling of the roof panel, the panels of the doors, the underparts of the rear window, the wheelhouse coverings for the boot and the like.

These elements can be rigid or semirigid, but in any case they must have the following indispensable characteristics: lightness, self-supportability, that is to say the ability to support their own weight without the help of auxiliary supporting structures, and soundproofing or deadening ability.

In a previous European patent application EP-A-84107681.3, filed by the same Applicant on July 3, 1984, a lightweight moldable product, and the related method of manufacture, are described, having excellent self-supporting qualities and satisfactory soundproofing qualities. The product comprises a glass fiber support wherein a low-density expanded material is dispersed which forms a microporous or substantially microporous surface.

This product is obtained starting from a small mat of glass fibers whereon a sheet of low-density expanded polymeric material of the open-cell type is superimposed. The mat and the sheet are subsequently cut and a layer of polyurethane resin is deposited on the sheet; the whole structure is then pressed in a heated mold which forms the preset shape.

The expandable resin consists of a mixture of polyole and isocyanate and the cut structure, sprayed with said two-part resin, is supplied to the mold in the pre-reaction or expansion reaction start step, which is completed inside said mold.

Another known lightweight and moldable material, adapted to the manufacture of panels and articles as specified, consists of a sandwich of two layers of glass fibers impregnated with resin, accommodating therebetween a porous, sound-proofing material. In the U.S. Patent No. 4.451.310, a method is described for the preparation of said lightweight moldable material, and consists of impregnating, by immersion, a continuous mat of soundproofing cell material with a compound selected among the isocyanate group and consequently having at least one NCO group in its formula; of wetting the impregnated mat, for example by a spray of water, preferably additioned with dimethylamine, which reacts with the isocyanate-based compound forming urea derivates; and of depositing, on both surfaces of the mat thus treated, a film of glass fiber which is covered by a corresponding polyethylene film. The structure is subsequently compressed so that the excess resin contained in the mat impregnates the glass fibers of the surface layers and is then cut in pieces which are sent to be molded to obtain the finished product.

The article thus obtained has excellent lightness and soundproofing qualities, but the process described for its manufacture, like the previous one, has considerable disadvantages. In fact, both are processes which must operate in a discontinuous manner with considerable intervals between successive moldings, with consequent slowing or halting of the product preparation steps upstream of the press, which negatively affect, and in any case significantly complicate, the execution of the process as described.

Moreover, the methods described entail highly environment-polluting steps, and therefore require complicated and expensive plants.

The aim of the present invention, starting from the knowledge of the above mentioned methods and products, is essentially to eliminate the disadvantages described above.

More in particular, the aim of the present invention is to perfect the manufacturing process of moldable, lightweight, self-supporting, soundproofing panels, having at least one resistant layer of impregnated fibers, in particular glass fibers, at least one layer of soundproofing material and possibly a covering in view.

Within the scope of this aim, the present invention furthermore has the following important objects:

-to provide a process which is free from the typical disadvantages of discontinous successions of material preparation steps and is therefore particularly adapted to the manufacture of articles obtained by subsequent molding,

-to provide a process adapted to allow the manufacture of variable-thickness molded products,

-to provide a continuous process which leads to a semiworked product which can be stored and used subsequently for the remaining steps of the process, which include the molding step which forms the finished product.

The semiworked intermediate product has features which are adapted to allow its winding in rolls, and this facilitates, as will become apparent hereinafter, the resumption of the preparation and molding steps of the finished articles.

In order to achieve this aim, these important objects, and others which will become apparent from the following detailed description, the present invention relates to a method characterized by a first step wherein a semiworked item is produced, consisting of a mat of glass fibers impregnated with thermoactivatable polyurethane resin which, after drying, may be rolled up and stored, and a second and subsequent step wherein a soundproofing spacer material is superimposed on at least one mat of glass fibers or is interposed between two of said mats, resulting from the first step; the structure comprising at least two layers, or the sandwich of three layers, is cut into pieces, and the piece is loaded into a forming mold, after the possible application of at least one aesthetical surface coating; the mold being heated and controlled by thermostats to produce the activation of the resin which, reacting irreversibly, assumes the required characteristics of rigidity and resistance to temperature and humidity.

The thermoactivatable polyurethane resin used in the first step of the process is selected among the following compounds:

a) a two-part polyurethane resin comprising:
-polyole
-isocyanate
-heat-decomposable inhibitor;

b) a two-part polyurethane resin comprising:
-polyole
-isocyanate
-temperature-threshold catalyst (or accelerator);

c) a two-part polyurethane resin obtained by polyaddition of OH groups and NCO groups and added to a heat-threshold blocking agent.

For the a) resin, the polyaddition reaction occurs in two successive moments as follows: in the first period, only the formation of a linear polymeric chain occurs, since complete three-dimensional polymerization is blocked by the inhibitor; in the second period, when the activation temperature is reached during molding, the inhibitor disappears by chemical decomposition, and the polyaddiction reaction completes in three dimensions and irreversibly.

For the b) resin, a similar behavior occurs, with the formation of a linear polymeric chain in the first period of the reaction. In the second period, when the activation temperature is reached during molding, the catalyst (accelerator) activates the polyaddition reaction, forming irreversible three-dimensional chains.

For the c) resin, the NCO groups remain inhibited by the heat-threshold blocking agent. Therefore this resin, dried in the first step of the process, reacts directly and irreversibly in the molding step when the activation temperature is reached.

The material superimposed on, or interposed between, the impregnated glass fiber mats, having a soundproofing and spacer function, is selected in the following group of materials:
-porous felt based on natural and/or artificial fibers;
-rigid or semirigid polyurethane;
-expanded thermoplastic materials;
-cardboard.

Embodiments of the method according to the present invention are now described with reference to the accompanying drawings, given only by way of non-limitative example, wherein:

-fig. 1 is a schematic view of the first step of the process,

-fig. 2 is a schematic view of the second step ending with the molding of the finished article.

EXAMPLE I

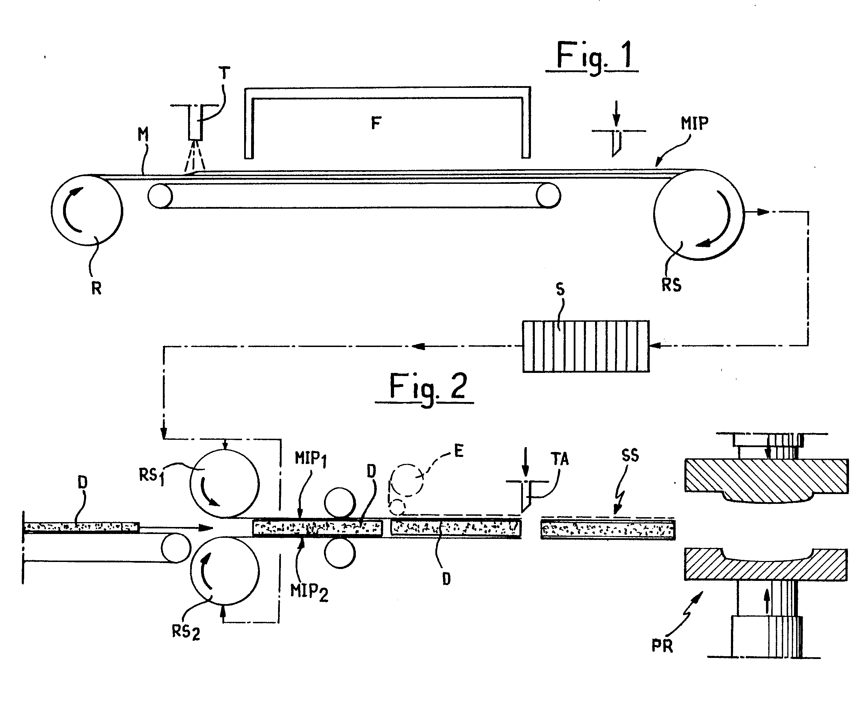

With reference to fig. 1, a glass fiber mat M having unit weight comprised between 50 and 200 g/sq.m., is unrolled from a roll R and sprayed, by means of a sprayer device T, only on one face with thermo-activatable resin having the following type a) composition:
-polyole
-isocyanate
-inhibitor: fluoboric acid.

The sprayer device T is of the type with high-pressure head mixing. The temperature of the components is of approximately 30°. In order to facilitate the first reaction with the formation of the linear chain, the operation is preferably done in a spraying room climatized at approximately 30°C. The amount of metered resin, which depends on the mechanical characteristics of the finished product, varies from 40 to 100 g/sq.m..

In such conditions the linear polyaddition reaction, and therefore the complete drying of the resin, occurs in approximately four minutes. The reaction can be accelerated by making the sprayed mat MIP pass in an oven F with circulating air heated to approximately 50°C.

The sprayed mat MIP is wound in rolls RS of semiworked material and is sent to be stored, where it can remain even for a long period of time, for example 30 days.

Before being wound in rolls, the sprayed mat can be covered, at least on one face, with a film of thermoplastic polymeric material, for example polyethylene.

In the second step of the process, which in the example illustrated refers to the manufacture of an article with a sandwich-like structure, a pair of rollers RS1-RS2 of sprayed mats MIP1-MIP2, coming from storage S at the end of the first processing step, is continuously unrolled; the mats being superimposed and spaced apart to receive, interposed, the spacer and sound-proofing material D. According to example I, the material D consists of sheets of rigid polyurethane with thickness comprised between 7 and 10 mm, which are inserted continuously between the mats MIP1-MIP2 appropriately spaced apart as illustrated schematically in the figure.

The continuous sandwich thus obtained is subject to cutting by means of a cutter TA and the pieces SS thus obtained are loaded one by one into the molding press PR of the type comprising counterposed male and female half-molds from which, after removal, the finished product is obtained. The mold of the press PR is heated and controlled by thermostats at a temperature comprised between 100 and 180°C.

An aesthetic covering E can be applied, before molding, on the surface of the article intended to remain in view, and is selected among the following group of materials:
-NWF (non-woven fabric)
-fabric
-fabric coupled to flexible polyurethane
-calendered PVC (polyvinylchoride)
-calendered ABS (Acrylonitrile-butadiene-styrene).

Depending on its nature, the covering E can be applied continuously - as indicated in broken lines in figure 2 -before cutting or be inserted, already cut, into the mold before loading the sandwich piece SS. During the molding, the activation reaction of the resin, which impregnates the mats MIP1-2, occurs. In the first heating step, the resin behaves thermoplastically, becoming semiliquid, and this allows the diffusion of said resin in the sheet D of spacer and soundproofing material, as well as in the covering E and the subsequent intimate connection thereof to the surface layers of glass fiber.

The molding forms the finished article, stiffens it and, by virtue of the diffusion and heat-activation of the impregnating resin, allows insertion and glueing, besides of the aesthetic covering, of all the components of the finished article, including any metallic inserts, couplings and the like.

If required, even the surface layer of the article which is not intended to remain in view can be provided with a functional covering selected among the following group of materials:
NWF, light fabric, paper, cardboard, calendered thermoplastic material.

In order to reduce the molding time, the semi-worked article is advantageously preheated, immediately upstream of the press, to a temperature below the resin's heat-activation temperature, for example to a temperature comprised between 50 and 80°C.

EXAMPLE II

The process is similar to the previous example, replacing, in the first step, the type a) resin with the following type b) resin:
-polyole
- isocyanate
-catalyst: tin tetrachloride.
The second step is unchanged.

EXAMPLE III

The process is similar to the preceding examples, replacing the type a) or type b) resin with the following type c) resin:
-polyole
-isocyanate
-blocking agent: phenol.
The second step is unchanged.

EXAMPLE IV

The first step of the process is similar to the examples I and II; in the second step of the process, the rigid polyurethane sheets D are replaced with sheets of a material selected among the following:
-porous felt based on natural and/or artificial fibers
-expanded thermoplastic materials
-cardboard.

EXAMPLE V

The first step is executed according to example I.

In the second step, the sheets D of soundproofing material are superimposed on a mat MIP. The finished product, after molding, has a structure with simple pairing of a resistant layer of glass fibers with a soundproofing layer, rather than a sandwich structure as in the preceding examples.

Naturally, the concept of the invention remaining invariant, the details of the execution of the process and the embodiments of the product may be extensively varied with respect to what has been described and illustrated by way of non-limitative example, without thereby abandoning the scope of the invention.

In particular, the storage of the semi-worked material, instead of after the first step of the process, can occur at the end of pairing the soundproofing material with the glass fiver mat or mats and after cutting. In this case, to keep the layers which compose the semiworked product together, the thermoplasticity assumed by the resin when heated below the heat-activation temperature, for example to approximately 90°C, is used.

Then the two sides of the composite piece are heated so as to allow the resin to act as glue, and the pieces thus treated are stored.

## Claims

1. A method for manufacturing moldable, lightweight, self-supporting and soundproofing articles, in particular inner panels for motor vehicles, characterized by a first step wherein a semi-worked item is produced, consisting of a mat of glass fibers impregnated with heat-activatable polyurethane resin which, after drying, may be rolled up and stored, and a second and subsequent step wherein a soundproofing spacer material is superimposed on at least one mat of glass fibers or is interposed between two of said mats, resulting from the first step, the structure comprising at least two layers, or the sandwich of three layers, is cut into pieces, and the piece is loaded into a forming mold, after the possible application of at least one aesthetical surface coating; the mold being heated and controlled by thermostats to produce the activation of the resin which, reacting irreversibly, assumes the required characteristics of rigidity and resistance to temperature and humidity.

2. A method according to claim 1, characterized in that the heat-activatable polyurethane resin used in said first step is selected among the following compounds:

a) a two-part polyurethane resin comprising:
-polyole;
-isocyanate;
-heat-decomposable inhibitor;

b) a two-part polyurethane resin comprising:
-polyole;
-isocyanate;
-temperature-threshold catalyst (or accelerator);

c) a two-part polyurethane resin obtained by polyaddition of OH groups and NCO groups added to a heat-threshold blocking agent.

3. A method according to claim 1, wherein the density of the glass fiber mat is selected so as to correspond to a unit weight comprised between 50 and 200 g/sq.m.

4. A method according to claim 1, wherein the material acting as soundproofing and spacer element superimposed on, or interposed between, the glass fiber mat or mats, is selected among the following group of materials:
-porous felt based on natural and/or artificial fibers;
- rigid or semirigid polyurethane:
-expanded thermoplastic materials;
-cardboard.

5. A method according to claim 1 and to any one of the claims 2 to 4, characterized in that said first step comprises, after the impregnation of the glass fiber mat with said heat-activatable polyurethane resin, covering of at least one face of the mat by deposition of corresponding films of thermoplastic polymeric material.

6. A method according to claim 5, wherein said films consist of polyethylene sheets.

7. A method according to claim 1, wherein said second step comprises, before cutting, superposition on at least one surface glass fiber layer, of an aesthetic covering intended to remain in view, and wherein said covering is selected among the materials of the following group:
-NWF (non-woven fabric);
-fabric;
-fabric paired with flexible polyurethane;
-calendered PVC (polyvinylchloride);
-calendered ABS (Acrylonitrile-butadiene-styrene).

8. A method according to claim 1, wherein the aesthetic surface layer is arranged directly in the mold before loading the piece of composite-structure material resulting from the first and second steps of the process.

9. A method according to claim 1, and to any one of claims 2 to 8, wherein said second step comprises further superposition of a functional covering on the layer intended to remain out of sight, and wherein said functional covering is selected among the following group of materials:
-NWF, light fabric, paper, cardboard, calendered thermoplastic material.

10. A method according to any one of the preceding claims, wherein molding of the material resulting from said first and second steps occurs at a temperature comprised between 100 and 180°C.

11. A method according to claim 1, wherein the semiworked material is stored after pairing of the soundproofing and spacer material and cutting, and wherein, to keep together the layers which compose the cut and semi-worked product, the thermoplasticity assumed by the resin by heating below the activation temperature is used.

12. A method according to any one of the claims 1 to 11, characterized in that it comprised a step of preheating of the semi-worked material, immediately preceding the molding step and in that said preheating occurs to a temperature comprised between 50 and 80°C.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | JP-A-49 118 768 (KUBOTA) --- | 1 | C 08 J 5/00<br>B 29 C 67/22<br>B 29 C 67/14 |
| D,Y | EP-A-0 137 125 (PIANFEI IPA)<br>* Page 2, line 20 - page 3, line 3 * | 1 | |
| X | * Page 4, lines 6-11 * --- | 2 | |
| D,Y | US-A-4 451 310 (LAIRLOUP)<br>* Page 1, lines 37-46 * --- | 1 | |
| X | US-A-2 596 162 (MUSKAT)<br>* Column 8, lines 18-28 * --- | 4 | |
| X | GB-A-1 141 382 (ALLMÄNNA)<br><br>* Page 4, lines 10-36 * --- | 5,6,10 -12 | TECHNICAL FIELDS SEARCHED (Int. Cl.4)<br><br>B 29 C<br>C 08 J |
| X | US-A-4 028 477 (GOPPEL et al.)<br>* Column 1, lines 48-64 * --- | 7-9 | |
| A | US-A-4 121 957 (ALLEN) --- | 1 | |
| A | FR-A-2 240 814 (WESTINGHOUSE)<br>* Page 5, line 35 - page 6, line 3 * ----- | 1 | |

The present search report has been drawn up for all claims

| Place of search | Date of completion of the search | Examiner |
|---|---|---|
| THE HAGUE | 21-09-1987 | ROBERTS P.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82